(19) Europäisches Patentamt
European Patent Office
Office européen des brevets

(11) **EP 4 727 246 A1**

(12) **EUROPEAN PATENT APPLICATION**
published in accordance with Art. 153(4) EPC

(43) Date of publication:
**15.04.2026 Bulletin 2026/16**

(21) Application number: **24838529.6**

(22) Date of filing: **17.06.2024**

(51) International Patent Classification (IPC):
*H04W 74/00* (2009.01)

(52) Cooperative Patent Classification (CPC):
**H04L 5/00; H04W 74/00**

(86) International application number:
**PCT/CN2024/099554**

(87) International publication number:
**WO 2025/011271 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 CN 202310836864**

(71) Applicant: **CICT Connected and Intelligent
Technologies Co., Ltd.
Chongqing 400041 (CN)**

(72) Inventors:
• **ZHENG, Shilei**
  **Chongqing 400041 (CN)**
• **ZHAO, Rui**
  **Chongqing 400041 (CN)**
• **WANG, Yakun**
  **Chongqing 400041 (CN)**
• **LIU, Yanqiang**
  **Chongqing 400041 (CN)**

(74) Representative: **De Clercq & Partners
Edgard Gevaertdreef 10a
9830 Sint-Martens-Latem (BE)**

(54) **CHANNEL SENDING OR RECEIVING METHOD AND APPARATUS, AND COMMUNICATION DEVICE**

(57)    Disclosed are a method and apparatus for transmitting or receiving channel, and a communication device, which belong to the technical field of communications. The method for transmitting or receiving channel in the embodiments of the present application includes: transmitting or receiving a physical sidelink control channel (PSCCH) and a physical sidelink shared channel (PSSCH), or transmitting or receiving the PSCCH, the PSSCH and a sidelink-positioning reference signal (SL-PRS); wherein the PSCCH is used for carrying first-stage sidelink control information, the first-stage sidelink control information is used for scheduling at least one of the PSSCH, second-stage sidelink control information and the SL-PRS; the PSSCH carries data and the second-stage sidelink control information, the second-stage sidelink control information is used to decode the PSSCH and/or to schedule the SL-PRS.

Fig. 2

A physical sidelink control channel (PSCCH) and a physical sidelink shared channel (PSSCH) is transmitted or received, or the PSCCH, the PSSCH and a sidelink-positioning reference signal (SL-PRS) is transmitted or received

201

## Description

## Cross-Reference to Related Application

The present application claims the priority of Chinese patent application no. 202310836864.6, filed in China on July 7, 2023, the disclosure of which is incorporated herein by reference in its entirety.

## Technical Field

The present application relates to the technical field of communications, and in particular, to a method and apparatus for transmitting or receiving channel, and a communication device.

## Background

With the rapid development of communication systems and terminal capabilities, a large number of location-based service applications have emerged. In order to meet the diverse demands of terminals for positioning services in terms of latency, accuracy, security, and other factors, NR (New Radio)-sidelink positioning has been introduced.

In NR-sidelink positioning, considering the relative positioning between terminals, i.e., the need for sidelink positioning, it is necessary to introduce the sidelink-positioning reference signal (SL-PRS) transmitted between terminals. This allows the terminals to complete the relative positioning process between the terminals directly over the sidelink, without relying on the base station.

The transmission and reception of the relevant SL-PRS can be introduced in the shared resource pool. However, introducing new signal transmission in the shared resource pool requires modifications to the corresponding channel structure design. The related art does not provide a channel structure that can be applied after introducing the SL-PRS into the shared resource pool.

## Summary

Provided are a method and apparatus for transmitting or receiving channel, and a communication device, which provide a channel structure which can be applied after introducing the SL-PRS into the shared resource pool.

According to a first aspect of some embodiments of the present application, a method for transmitting or receiving channel is provided, and the method including:

transmitting or receiving a physical sidelink control channel (PSCCH) and a physical sidelink shared channel (PSSCH), or transmitting or receiving the PSCCH, the PSSCH and a sidelink-positioning reference signal (SL-PRS);

wherein the PSCCH is used for carrying first-stage sidelink control information, the first-stage sidelink control information is used for scheduling at least one of the PSSCH, second-stage sidelink control information and the SL-PRS;

the PSSCH carries data and the second-stage sidelink control information, the second-stage sidelink control information is used to decode the PSSCH and/or to schedule the SL-PRS.

According to a second aspect of some embodiments of the present application, an apparatus for transmitting or receiving channel is provided, the apparatus including:

a transmitting or receiving component, configured to transmit or receive a physical sidelink control channel (PSCCH) and a physical sidelink shared channel (PSSCH), or transmit or receive the PSCCH, the PSSCH and a sidelink-positioning reference signal (SL-PRS);

wherein the PSCCH is used for carrying first-stage sidelink control information, the first-stage sidelink control information is used for scheduling at least one of the PSSCH, second-stage sidelink control information and the SL-PRS;

the PSSCH carries data and the second-stage sidelink control information, the second-stage sidelink control information is used to decode the PSSCH and/or to schedule the SL-PRS.

According to a third aspect of some embodiments of the present application, a communication device is provided.

The communication device includes a processor and a memory. The memory stores a program or an instruction that can run on the processor. When the program or the instruction is executed by the processor, the steps of the method according to the first aspect are implemented.

According to a fourth aspect of some embodiments of the present application, provided is a communication device, including a processor and a communication interface, wherein the communication interface is used for transmitting or receiving a physical sidelink control channel (PSCCH) and a physical sidelink shared channel (PSSCH), or transmitting or receiving the PSCCH, the PSSCH and a sidelink-positioning reference signal (SL-PRS);

wherein the PSCCH is used for carrying first-stage sidelink control information, the first-stage sidelink control information is used for scheduling at least one of the PSSCH, second-stage sidelink control information and the SL-PRS;

the PSSCH carries data and the second-stage sidelink control information, the second-stage sidelink control information is used to decode the PSSCH and/or to schedule the SL-PRS.

According to a fifth aspect of some embodiments of the present application, a readable storage medium is provided, wherein the readable storage medium stores a program or an instruction, and when the program or the instruction is executed by a processor, the steps of the method according to the first aspect are implemented.

According to a sixth aspect of some embodiments of the present application, a chip is provided. The chip comprises a processor and a communication interface, wherein the communication interface is coupled to the processor, and the processor is configured to run a program or an instruction, so as to implement the method according to the first aspect.

According to a seventh aspect of some embodiments of the present application, provided is a computer program/program product which is stored in a storage medium, the program/program product being executed by at least one processor to implement the steps of the method according to the first aspect.

In some embodiments of the present application, a PSCCH and a PSSCH are transmitted or received; or the PSCCH, the PSSCH and an SL-PRS are transmitted or received, wherein the PSCCH is used for carrying first-stage sidelink control information, and the first-stage sidelink control information is used for scheduling at least one of the PSSCH, the second-stage sidelink control information and the SL-PRS; the PSCH carries data and second-stage sidelink control information, the second-stage sidelink control information is used to decode the PSSCH and/or schedule the SL-PRS. Hence, the embodiments of the present application provide a new channel structure which can be applied after introducing the SL-PRS into the shared resource pool, thereby laying a foundation for realizing sidelink positioning.

**Brief Description of the Drawings**

Fig. 1 is a schematic diagram of a channel structure in the related art;

Fig. 2 is a schematic flowchart of a method for transmitting or receiving channel according to some embodiments of the present application;

Fig. 3 is a schematic diagram of a channel structure according to some embodiments of the present application;

Fig. 4 is a structural block diagram of an apparatus for transmitting or receiving channel according to some embodiments of the present application;

Fig. 5 is a structural block diagram of a communication device according to some embodiments of the present application.

**Detailed Description of the Embodiments**

Hereinafter, the technical solutions in the embodiments of the present disclosure will be described clearly with reference to the accompanying drawings of the embodiments of the present disclosure. Obviously, the embodiments as described are only some of the embodiments of the present disclosure, and are not all of the embodiments. All other embodiments obtained by a person skilled in the art on the basis of the embodiments in the present application shall fall within the scope of protection of the present application.

The terms "first", "second", and the like in the present application are used to distinguish between similar objects, but are not necessarily used to describe a specific order or sequence. It should be understood that terms used in such a way are interchangeable under proper conditions, so that the embodiments of the present application can be implemented in an order different from the order shown or described herein. In addition, "first" and "second" are usually used to distinguish objects of a same type, and do not restrict a quantity of objects. For example, there may be one or a plurality of first objects. In addition, "or" in the present application represents at least one of connected objects. For example, "A or B" encompasses three solutions, i.e., solution I, which includes A and does not include B; solution II, which includes B and does not include A; and solution III, which includes both A and B. The character "/" generally indicates an "or" relationship between the associated objects. It should be noted that, the technologies described in the embodiments of the present application are not limited to a long term evolution (LTE)/LTE-advanced (LTE-A) system, and may be further applied to other wireless communication systems, such as code division multiple access (CDMA), time division multiple access (TDMA), frequency division multiple access (FDMA), orthogonal frequency division multiple access (OFDMA), single-carrier frequency-division multiple access (SC-FDMA), and other systems. In the embodiments of the present application, the terms "system" and "network" may usually be used interchangeably. The described technology can be applied to the systems and radio technologies mentioned above, and can also be applied to other systems and radio technologies. The following description describes a new radio (NR) system for an exemplary objective, and uses NR terms in most of the following description, though such technologies may also be applied to applications except an NR system application, such as a 6th generation (6G) communication system.

First, in order to facilitate understanding of a method for transmitting or receiving channel according to some embodiments of the present application, the following content is introduced.

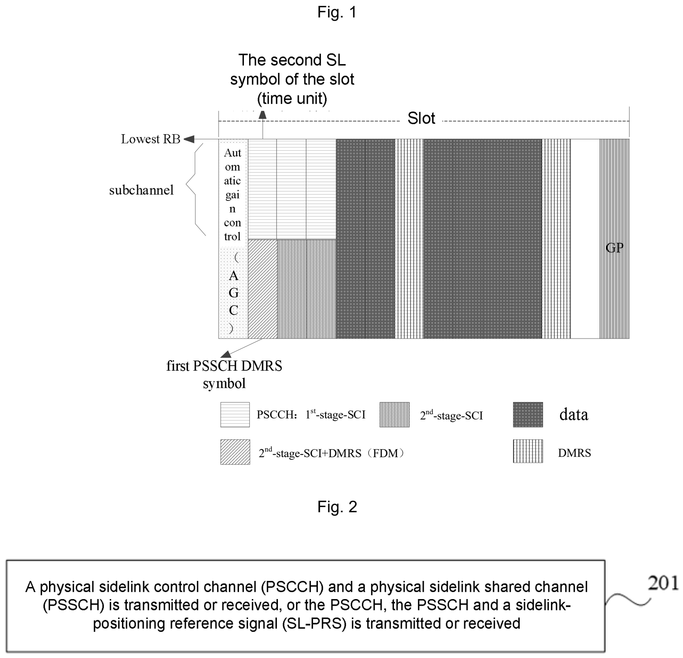

In the related art, as shown in figure 1, in a shared resource pool, a physical sidelink control channel (PSCCH) and a physical sidelink shared channel (PSSCH) adopt a manner of time division multiplexing (TDM) and frequency division multiplexing (FDM), and introduces second-stage sidelink control information ($2^{nd}$-stage SCI), which is borne by a PSSCH together with data. The first-stage sidelink control information ($1^{st}$-stage SCI) is carried by the PSCCH, and is used to indicate information such as the position, priority, period, and corresponding modulation and coding scheme (MCS) of a time-frequency resource occupied by the current transport block.

In order to realize an SL-Positioning technology, transmitting an SL-PRS in a resource pool corresponding to the Release 16 (R16) or the Release 17 (R17) is a feasible method, and such an approach can save sidelink resources and improve the resource utilization rate. However, this introduces the issue of forward compatibility, that is, how to minimize the impact of Release 18 (R18) SL-Positioning UEs on R16 or R17 UEs, how to ensure that the resource allocation mechanisms for R16 and R17 are not affected, and how to ensure that R18 UEs can function properly, etc. are all problems to be solved.

In addition, in existing sidelink communications, the SL-PRS reference signal has not been introduced, nor is there any process design for related positioning interactions. If some existing reference signals are reused as SL-PRS, the primary issues lie in accuracy and flexibility, and the Power Spectral Density (PSD) is also affected by multiplexing with other signals. However, in some embodiments of the present application, by introducing a new SL-PRS transmission and mapping mechanism, the original design rule of the first -stage SCI is retained as far as possible, so as to ensure forward compatibility, and while avoiding the impact on R16 and 17 UEs as far as possible, the transmission performance of the SL-PRS is ensured.

The method for transmitting or receiving channel according to some embodiments of the present application will be described in detail below with reference to some embodiments and application scenarios thereof in conjunction with the accompanying drawings.

According to a first aspect, embodiments of the present application provide a method for transmitting or receiving channel. As shown in Fig. 2, the method may include step 201 as follows:

step 201: a physical sidelink control channel (PSCCH) and a physical sidelink shared channel (PSSCH) is transmitted or received, or the PSCCH, the PSSCH and a sidelink-positioning reference signal (SL-PRS) is transmitted or received;

wherein the PSCCH is used for carrying first-stage sidelink control information, the first-stage sidelink control information is used for scheduling at least one of the PSSCH, second-stage sidelink control information and the SL-PRS; the PSSCH carries data and the second-stage sidelink control information, the second-stage sidelink control information is used to decode the PSSCH and/or to schedule the SL-PRS.

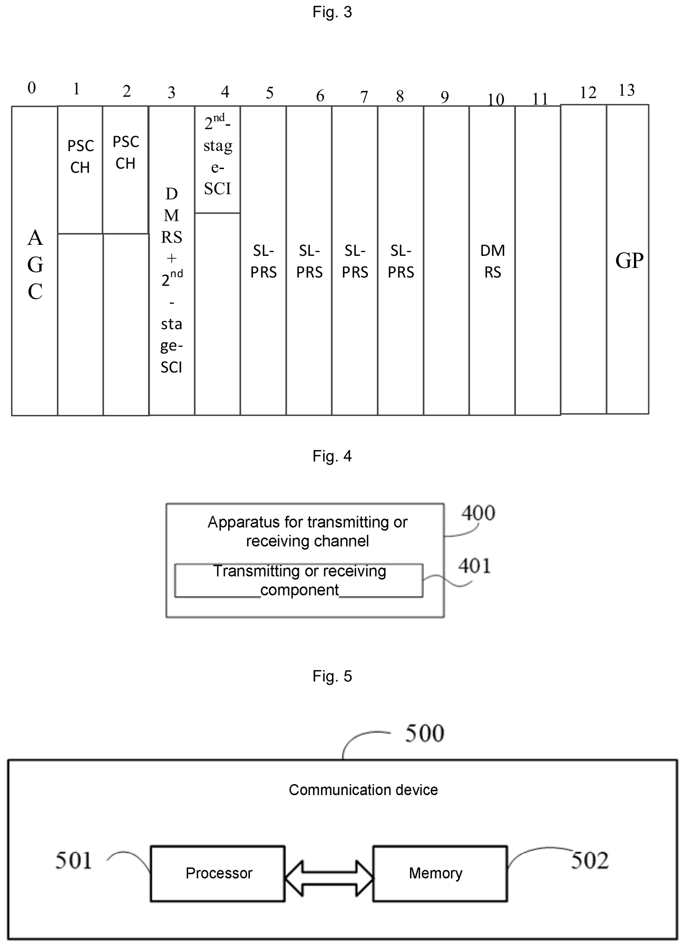

Hence, embodiments of the present application provide a new channel structure which can be applied after introducing the SL-PRS into the shared resource pool, thereby laying a foundation for realizing sidelink positioning. Exemplarily, the channel structure may be shown in Fig. 3.

That is, embodiments of the present application provide a new channel structure after introducing SL-PRS into the shared resource pool; under this channel structure, the transmitting device can transmit the PSCCH and the PSSCH, or transmit the PSCCH, the PSSCH, and the SL-PRS. The receiving device may then receive the PSCCH and the PSSCH, or the PSCCH and the PSSCH and the SL-PRS.

Hence, after the SL-PRS is introduced into the shared resource pool, the SL-PRS can be transmitted together when the PSCCH and the PSSCH are transmitted, and thus the SL-PRS is received together when the PSCCH and the PSSCH are received.

It should be noted that, in the shared resource pool, if transmitting or receiving of SL-PRS is involved, an additional restriction can be imposed that initial transmissions and retransmissions must maintain consistent slot structures, either all carrying SL-PRS or none carrying SL-PRS, mainly to ensure consistency in the Transport Block Size (TBS) calculation results for initial transmissions and retransmissions. That is, if the SL-PRS is also transmitted when the PSCCH and the PSSCH are transmitted initially, the PSCCH, the PSSCH and the SL-PRS are also transmitted during retransmission; and if the SL-PRS is not transmitted when the PSCCH and the PSSCH are initially transmitted, then only the PSCCH and the PSSCH are transmitted upon retransmission. In this way, the merging of the initial transmission and retransmission of the service data is not affected.

Alternatively, if the SL-PRS is also transmitted when the PSCCH and the PSSCH are transmitted initially, then overhead information of the SL-PRS needs to be carried if the SL-PRS is not carried during retransmission, and the overhead information is consistent with the overhead information during the initial transmission, so that the calculation result is consistent with the calculation result of the TBS of the initial retransmission.

Alternatively, if only the PSCCH and the PSSCH are transmitted during initial transmission, then overhead information of the SL-PRS needs to be carried if the SL-PRS is carried during retransmission, and the overhead information is consistent with the overhead information during the initial transmission, so as to keep consistency with the calculation result of the TBS of the initial retransmission.

In some embodiments of the present application, "the SL-PRS is transmitted or received" in step 201 includes step A1 as follows:

step A1: a target time-domain resource which can be used for transmitting or receiving the SL-PRS is determined in a first resource according to time-domain configuration information of an SL-PRS, wherein the first resource is a time-domain resource, located after a second resource, in a time unit of a shared resource pool; and the second resource is a time-domain resource used for transmitting or receiving second-stage sidelink control information (2nd-stage SCI); and

the SL-PRS is transmitted or received on the target time-domain resource.

The 2nd-stage SCI can be used for scheduling the SL-PRS, that is, the 2nd-stage SCI can bear scheduling information of the SL-PRS; therefore, resource mapping of the SL-PRS cannot overlap with resource mapping of the 2nd-stage SCI, and the SL-PRS can be mapped after the 2nd-stage SCI is mapped in the shared resource pool.

In addition, the time unit may be a time slot, or may be a time period formed by continuous m symbols in a time slot, m being an integer greater than zero.

In some embodiments of the present application, the time-domain configuration information of the SL-PRS includes a symbol length N of the SL-PRS.

The step A1 "a target time-domain resource which can be used for transmitting or receiving the SL-PRS is determined in a first resource according to time-domain configuration information of an SL-PRS" includes the following steps B1,

step B1: continuous M symbols in the first resource that do not overlap with the third resource are determined, so as to obtain the target time-domain resource,

wherein the third resource is a resource used for transmitting or receiving a first object, the value of M is N or N+k1, and N and k1 are respectively integers greater than zero.

In some embodiments of the present application, the first object refers to an object (except 2nd-stage SCI) that has been transmitted or received by means of resources in the shared resource pool. After introducing the SL-PRS into the shared resource pool, the resource mapping of SL-PRS must not only avoid overlapping with the resource mapping of the 2nd-stage SCI, but also avoid overlapping with the resource mapping of other existing objects (i.e., the first object) that transmit resources by means of the shared resource pool, thereby preventing the transmission of SL-PRS from affecting the transmission and reception of the 2nd-stage SCI and the first object.

It should be noted that, when M=N+k1, k1 symbols are used to process an automatic gain control (AGC) and/or a guard interval (Gap). The value of k1 may be a positive integer greater than or equal to 1.

In some embodiments of the present application, the first object includes a demodulation reference signal

(DMRS) and/or a second object.

The second object may include at least one of a PSCCH, a phase-tracking reference signal (PT-RS), a channel state information-reference signal (CSI-RS), and a physical sidelink feedback channel (PSFCH).

Therefore, the first object includes at least one of a DMRS, a PSCCH, a PT-RS, a CSI-RS and a PSFCH.

That is, a symbol that can be used to transmit or receive an SL-PRS refers to a symbol that does not overlap with a symbol that is used to transmit or receive at least one of: 2nd-stage SCI, a DMRS, a PSCCH, a PT-RS, a CSI-RS and a PSFCH.

Hence, in some embodiments of the present application, the resource mapping of the SL-PRS does not overlap with the resource mapping of at least one of the 2nd-stage SCI, the DMRS, the PSCCH, the PT-RS, the CSI-RS and the PSFCH, so that the impact of the R18 sidelink pointing UE on the R16 or R17 UE is minimized, that is, it avoids affecting the resource allocation mechanisms of R16 or R17 while ensuring that the R18 UE can operate normally.

The described resource overlapping includes overlapping of time-domain resources and/or frequency-domain resources.

The implementation manners of "continuous M symbols in the first resource that do not overlap with the third resource are determined, so as to obtain the target time-domain resource" in the foregoing step B1 is specifically introduced as follows:

manner I: in some embodiments of the present application, the foregoing step B1 "continuous M symbols in the first resource that do not overlap with the third resource are determined, so as to obtain the target time-domain resource" includes the following step C1:

step C1: a target symbol is determined in a target symbol interval on the first resource, and the target symbol is determined as the target time-domain resource;

wherein the target symbol interval includes a first symbol interval, symbol intervals between every two DMRS with an index difference of $k2$ on the first resource, and a second symbol interval, wherein the first symbol interval is an symbol interval between a reference symbol in the first resource and a symbol used for transmitting or receiving the first DMRS; the second symbol interval is a symbol interval between a symbol used for transmitting or receiving the last DMRS in the first resource and an last symbol of the first resource, and $k2$ is a preset step size;

the first DMRS is a DMRS located on the first resource, behind the reference symbol in the time domain, and closest to the reference symbol;

the target symbol is M continuous symbols which do not overlap with a resource used for transmitting or receiving the second object, or the target symbol is M continuous symbols.

As described above, the first resource is a time-domain resource, located after a second resource, in a time unit of a shared resource pool; and the second resource is a time-domain resource used for transmitting or receiving second-stage sidelink control information. Therefore, the last symbol may refer to the last symbol in the first resource, and may also refer to the last symbol in the time unit.

In addition, resource mapping of the SL-PRS does not overlap with resource mapping of the DMRS, and therefore, the SL-PRS needs to be mapped on the resources of the first resources other than those used for transmitting or receiving the DMRS. Furthermore, continuous M symbols are also required when the SL-PRS is mapped, and therefore, it is determined whether there is a target symbol in the target interval.

In addition, the reference symbol can be the xth symbol located after the second resource in the time unit of the shared resource pool (i.e., after mapping the 2nd-stage SCI), where x can be configured by higher-layer parameters or pre-configured, or predefined by the protocol, such as being predefined as the first symbol after the second resource.

In some embodiments of the present application, the step C1 "a target symbol is determined in a target symbol interval on the first resource, and the target symbol is determined as the target time-domain resource" includes the following steps D1 to D7:

step D1: it is determined whether there is a target symbol in the first symbol interval;

step D2: in cases where there is a target symbol in the first symbol interval, the target symbol of the first symbol interval is determined as the target time-domain resource;

step D3: in cases where there is no target symbol in the first symbol interval, the value of Num is set as the index of the first DMRS;

step D4: it is determined whether the DMRS with an index Num is the last DMRS of the first resource;

step D5: in cases where the DMRS with the index Num is not the last DMRS of the first resource, it is determined whether there is a target symbol in a third symbol interval between a DMRS with an index Num on the first resource and a DMRS with an index Num+k2; in cases where there is a target symbol in the third symbol interval, the target symbol in the third symbol interval is determined as the target time-domain resource; and in cases where there is no target symbol in the third symbol interval, Num is set to the current value increased by k2, and return to the step of determining whether the DMRS with the index Num is the last DMRS on the first resource (i.e. step D4);

step D6: in cases where the DMRS with the index Num is the last DMRS on the first resource, it is determined whether there is a target symbol in the second symbol interval, and in cases where there is a target symbol in the second symbol interval, the first symbol of the second symbol interval is determined as the target time-domain resource;

step D7: in cases where there is no target symbol in the second symbol interval, it is determined that there is a configuration error in N.

In some embodiments of the present application, the value of k2 is 1.

For example, if k2=1, when there are two DMRSs on the first resource, when determining the target symbol in the target symbol interval, whether there is a target symbol between the reference symbol and the first DMRS may be determined first, and if there is a target symbol between the reference symbol and the first DMRS, resource mapping of the SL-PRS in the current time unit is completed;

if there is no target symbol between the reference symbol and the first DMRS, it is set that Num = 1, so as to determine whether there is a target symbol between a DMRS with an index of Num and a DMRS with an index of Num + 1; and if there is a target symbol between the DMRS with an index of Num and the DMRS with an index of Num + 1, resource mapping of the SL-PRS in the current time unit is completed;

if there is no target symbol between the DMRS with the index of Num and the DMRS with the index of Num+1, it is determined whether there is a target symbol between the last column of DMRSs and the last symbol of the first resource; and if there is a target symbol between the last column of DMRSs and the last symbol of the first resource, resource mapping of the SL-PRS in the current time unit is completed;

if there is no target symbol between the second DMRS and the last symbol of the first resource, there is a configuration error in the symbol length N of the SL-PRS.

It is particularly noted that the index of the DMRS corresponds to the index in the set of DMRS symbols on the first resource. For example, if there are two DMRS on the current first resource, the indexes of these two columns of DMRS are (1, 2) or (0, 1) respectively; if the index of the DMRS starts from 0, then the initial value of Num shall be equal to 0 instead of 1.

For ease of understanding of the manner 1, the manner 1 is now explained with reference to the following embodiment 1:

Embodiment 1: an SL-PRS time-domain mapping method 1 includes the following steps 1.1 to 1.3:

step 1.1: it is set that $L_{ref}$ represents an index of the reference symbol after the 2nd-stage SCI is mapped (the reference point of the index of the reference symbol is the start symbol of the PSSCH or the start symbol of the time unit); $L_{SL-PRS}$ represents the number of the SL-PRS symbols determined by a higher-layer parameter or a physical layer or a SCI indication; $L_{end\_of\_PSSCH}$ represents the last symbol index of the PSSCH, wherein the symbol index starts from 0.

The reference symbol may be the xth symbol after the 2nd-stage SCI is mapped, where x may be configured by a higher-layer parameter or pre-configured, or predefined by a protocol; the SCI indicating $L_{SL-PRS}$ includes at least one of 1st-stage SCI and 2nd-stage SCI.

Step 1.2: it is determined whether the symbol index interval $[I_{ref}, I_{ref}+L_{SL-PRS}-1]$ overlaps with at least one of the following symbols: DMRS symbols, PT-RS symbols, CSI-RS symbols, the PSCCH and the PSFCH.

Step 1.3: if $I_{ref}+L_{SL-PRS}-1>L_{end\_of\_PSSCH}$, then there is a configuration error in $L_{SL-PRS}$.

Step 1.4: if there is an overlap with the above symbols, $I_{ref}$ is set to be the index value corresponding to the last symbol in the overlapping symbols, and step 1.2 is re-executed.

Step 1.5: if there is no overlap with the above symbols, the SL-PRS is mapped within the index interval $[I_{ref}, I_{ref}+L_{SL-PRS}-1]$.

It should be noted that, if $L_{SL-PRS}$ is configured in such a way that it satisfies $I_{ref}+L_{SL-PRS}-1\leq L_{end\_of\_PSSCH}$, then step 1.3 can be omitted.

In addition, it should be noted that, the foregoing manner 1 is a method for mapping time-domain resources of an SL-PRS. For a method for mapping a frequency-domain resource of an SL-PRS, a frequency-domain resource used for transmitting or receiving the SL-PRS may be mapped on the basis of frequency-domain configuration information of the SL-PRS.

In some embodiments of the present application, the first information indicates at least one of the following:

identification information (i.e. an SL-PRS Resource ID) of the resources of the SL-PRS;

the symbol length N of the SL-PRS; and

frequency-domain configuration information of the SL-PRS;

wherein the first information includes the first-stage sidelink control information and/or the second-stage sidelink control information.

Hence, at least one of the SL-PRS Resource ID, the symbol length N of the SL-PRS, and the frequency-domain configuration information of the SL-PRS can be indicated by means of the $1^{st}$-stage SCI and/or $2^{nd}$-stage SCI, so that the time-domain resources and the frequency-domain resources used for transmitting or receiving the SL-PRS can be mapped on the basis of these information by using the manner I.

The frequency-domain configuration information of the SL-PRS may include at least one of the following: an SL-PRS Resource ID, an SL-PRS frequency-domain pattern, and a comb offset.

Here, when the REoffset configuration is a parameter configured or pre-configured on the basis of a resource pool, the $1^{st}$-stage SCI and/or $2^{nd}$-stage do not need to indicate the parameter. The comb offset is the REoffset, which indicates a comb offset configuration.

It should be noted that an SL-PRS resource refers to a time-frequency resource used for transmitting an SL-PRS in a unit time (for example, a slot) in a positioning dedicated resource pool, wherein one SL-PRS resource is associated with at least one of the following characteristics:

an SL-PRS Resource ID;

an SL-PRS comb offset and a related SL-PRS comb size;

an SL-PRS start symbol position and a symbol length N;

SL-PRS frequency-domain allocation; and

other time-domain information.

That is, in one slot in the positioning dedicated resource pool, one SL-PRS resource may be identified by a unique SL-PRS resource ID.

Manner II: in some embodiments of the present application, the time-domain configuration information of the SL-PRS further includes the time-domain start symbol position of the SL-PRS; the foregoing step B1 "continuous M symbols in the first resource that do not overlap with the third resource are determined, so as to obtain the target time-domain resource" includes the following step E1:

step E1: determining M continuous symbols in the first resource according to a start symbol position of the SL-PRS and a symbol length N of the SL-PRS, so as to obtain the target time-domain resource.

Hence, if the time-domain start symbol position of the SL-PRS and the symbol length N are known, M continuous symbols used for transmitting or receiving the SL-PRS may be mapped in the first resource.

In addition, it should be noted that, the foregoing manner II is a method for mapping time-domain resources of an SL-PRS. For a method for mapping a frequency-domain resource of an SL-PRS, a frequency-domain resource used for transmitting or receiving the SL-PRS may be mapped on the basis of frequency-domain configuration information of the SL-PRS.

In some embodiments of the present application, the first information indicates at least one of the following:

identification information of resources of the SL-PRS;

a time-domain start symbol position of the SL-PRS;

the symbol length N of the SL-PRS; and

frequency-domain configuration information of the SL-PRS;

wherein the first information includes the first-stage sidelink control information and/or the second-stage sidelink control information.

Hence, at least one of the SL-PRS Resource ID, the time-domain start symbol position of the SL-PRS, the symbol length N of the SL-PRS, and the frequency-domain configuration information of the SL-PRS can be indicated by means of the 1st-stage SCI and/or 2nd-stage SCI, so that the time-domain resources and the frequency-domain resources used for transmitting or receiving the SL-PRS can be mapped on the basis of these information by means of manner II.

Therefore, the time-domain configuration information of the SL-PRS includes at least one of the following items: an SL-PRS Resource ID, a start symbol position, and a symbol length N.

In some embodiments of the present application, the time-domain configuration information of the SL-PRS has an association relationship with pattern information of the DMRS.

The currently used DMRS pattern can be configured by means of a higher-layer parameter, or pre-configured, so that the time-domain configuration information of the SL-PRS corresponding to the currently used DMRS pattern can be determined according to the association relationship between the time-domain configuration information of the SL-PRS and the DMRS pattern, and thus the time-domain resource used for transmitting or receiving the SL-PRS can be mapped according to the time-domain configuration information of the SL-PRS corresponding to the currently used DMRS pattern.

In some embodiments of the present application, a combination pattern of the DMRS pattern and the time-domain configuration information of the SL-PRS may also be configured, and in this way, on the basis of the time-domain configuration information of the SL-PRS in the combination pattern where the currently used DMRS pattern is located, a time-domain resource used for transmitting or receiving the SL-PRS may be mapped directly.

The specific manner for mapping, according to the determined time-domain configuration information of the SL-PRS, the time-domain resource used for transmitting or receiving the SL-PRS may be manner I or manner II.

The method for mapping the time-domain resource of the SL-PRS when there is an association relationship between the time-domain configuration information of the SL-PRS and the DMRS pattern will be explained below with reference to embodiment 2 and embodiment 3.

Embodiment 2: the SL-PRS time-domain mapping method II includes steps 2.1 to 2.3 as follows:

step 2.1: when different DMRS patterns are configured by the higher-layer parameter, one or more SL-PRS symbol length configuration sets that can be supported are configured by the higher-layer parameter, or pre-configured;

step 2.2: after the currently used DMRS pattern is determined (i.e. one is selected from different DMRS patterns configured by the higher-layer parameter), a number of SL-PRS symbols, N, is selected from an SL-PRS symbol length configuration set on the basis of the number of the supported SL-PRS symbols under the currently used DMRS pattern;

step 2.3: on the basis of the selected number of SL-PRS symbols, N, in step 2.2, the SL-PRS time-domain mapping in steps 1.1 to 1.3 of embodiment 1 is performed.

Embodiment 3: the SL-PRS time-domain mapping method III may specifically be described in steps 3.1 to 3.2 as follows:

step 3.1: when different DMRS patterns and the corresponding time-domain configuration information of the SL-PRS are configured by the higher-layer parameter, a physical layer determines the corresponding time-domain configuration information of the SL-PRS according to the selected DMRS pattern;

step 3.2: the time-domain mapping of the SL-PRS is performed according to the time-domain configuration information of the SL-PRS.

When the time-domain configuration information of the SL-PRS includes the symbol length N of the SL-PRS, the SL-PRS time-domain mapping may be performed in steps 1.1 to 1.3 of the embodiment 1; when the time-domain configuration information of the SL-PRS includes a symbol length N of the SL-PRS and a time-domain start symbol position of the SL-PRS, time-domain resource mapping of the SL-PRS may be performed by means of manner II.

In addition, it should be noted that the frequency-domain configuration information of the SL-PRS may also be associated with the DMRS pattern. In this case, the relevant explanation about the mapping of the frequency-domain resources of the SL-PRS is similar to that in the embodiment 2 and 3, which is not repeated herein.

In addition, it should be noted that, the time-domain and/or frequency-domain configuration information of the SL-PRS may also be directly configured by the higher-layer parameter or pre-configured, may also be predefined by a protocol, and may also be determined according to the DMRS pattern information.

With respect to the time-domain and/or frequency-domain configuration information of the SL-PRS, when the SL-PRS is transmitted, the time-domain configuration information of the SL-PRS may be configured by the higher-layer parameter or pre-configured, and filled in to the 1st-stage SCI or 2nd-stage SCI; upon receipt of the SL-PRS, the time-domain configuration information of the SL-PRS may be obtained by means of the 1st-stage SCI or 2nd-stage SCI.

In some embodiments of the present application, first overhead information of the SL-PRS is indicated by one of the following information:

the first-stage sidelink control information;

higher-layer parameters; and

pre-configured information.

In some embodiments of the present application, the first-stage sidelink control information indicates the first overhead information, or the first-stage sidelink control information carries pattern information of the first overhead information;

wherein the pattern information of the first overhead information and second information have an association relationship with the first overhead information;

the second information includes at least one of DMRS pattern information, the number of symbols of the PSCCH, the number of symbols of the PSSCH, time-frequency configuration information of a phase tracking reference signal (PT-RS) and time-frequency configuration information of a channel state information reference signal (CSI-RS).

Hence, the details of indicating the first overhead information of the SL-PRS by means of the 1st-stage SCI may be as described in case 1 or case 2 as follows.

Case 1: as shown in Table 1 and Table 2, the overhead information of the SL-PRS is explicitly indicated by means of reserved bits in 1st-stage SCI:

Table 1 SL-PRS overhead information indication manner 1

| SL-PRS overhead pattern 1 | SL-PRS overhead pattern 2 | SL-PRS overhead pattern 3 | SL-PRS overhead pattern 4 |
|---|---|---|---|
| 1 symbol | 2 symbols | 4 symbols | 6 symbols |

Table 2 SL-PRS overhead information indication manner 2

| SL-PRS overhead pattern 1 | SL-PRS overhead pattern 2 | SL-PRS overhead pattern 3 | SL-PRS overhead pattern 4 | SL-PRS overhead pattern 5 | SL-PRS overhead pattern 6 |
|---|---|---|---|---|---|
| 1 symbol | 2 symbols | 3 symbols | 4 symbols | 5 symbols | 6 symbols |

Case 2: as shown in Table 3 and Table 4, the overhead information of the SL-PRS is indicated implicitly by the reserved bits in the 1st-stage SCI, that is, the SL-PRS overhead pattern is indicated implicitly by the reserved bits in the 1st-stage SCI, so as to determine the final overhead of the SL-PRS on the basis of at least one piece of the following information: DMRS pattern information, the number of PSCCH symbols, the number of PSSCH symbols, PT-RS time-frequency configuration information, and CSI-RS time-frequency configuration information.

That is, as shown in Table 3 and Table 4, the reserved bits in the 1st-stage SCI may carry an overhead pattern of the SL-PRS, and there is an association relationship between the overhead pattern and DMRS pattern and the specific overhead information of the SL-PRS, so that the specific overhead information of the SL-PRS may be determined according to the overhead pattern of the SL-PRS and DMRS pattern.

Table 3 SL-PRS overhead information indication manner 3

| DMRS pattern (corresponding to index information of the DMRS symbolic) | SL-PRS overhead pattern 1 | SL-PRS overhead pattern 2 | SL-PRS overhead pattern 3 | SL-PRS overhead pattern 4 |
|---|---|---|---|---|
| 1, 5 | 1 symbol | 2 symbols | | |
| 3, 8 | 1 symbol | 2 symbols | 4 symbols | |
| 4, 8 | 1 symbol | 2 symbols | | |
| 3, 10 | 1 symbol | 2 symbols | 4 symbols | 6 symbols |
| 4, 10 | 1 symbol | 2 symbols | 4 symbols | |
| 1, 4, 7 | 1 symbol | 2 symbols | | |
| 1, 5, 9 | 1 symbol | 2 symbols | | |
| 1, 6, 11 | 1 symbol | 2 symbols | 4 symbols | |
| 1, 4, 7, 10 | 1 symbol | 2 symbols | | |

Table 4 SL-PRS overhead information indication manner 4

| DMRS pattern | SL-PRS overhead pattern 1 | SL-PRS overhead pattern 2 | SL-PRS overhead pattern 3 | SL-PRS overhead pattern 4 | SL-PRS overhead pattern 5 | SL-PRS overhead pattern 6 |
|---|---|---|---|---|---|---|
| 1, 5 | 1 symbol | 2 symbols | | | | |
| 3, 8 | 1 symbol | 2 symbols | 3 symbols | 4 symbols | | |
| 4, 8 | 1 symbol | 2 symbols | | | | |
| 3, 10 | 1 symbol | 2 symbols | 3 symbols | 4 symbols | 5 symbols | 6 symbols |
| 4, 10 | 1 symbol | 2 symbols | 3 symbols | 4 symbols | | |
| 1, 4, 7 | 1 symbol | 2 symbols | | | | |
| 1, 5, 9 | 1 symbol | 2 symbols | | | | |
| 1, 6, 11 | 1 symbol | 2 symbols | 3 symbols | 4 symbols | | |
| 1, 4, 7, 10 | 1 symbol | 2 symbols | | | | |

In some embodiments of the present application, the method further includes:

step F1: a first rate matching of the second-stage sidelink control information is calculated according to the first overhead information, and a transport block size of the PSSCH is calculated according to the first rate matching; or,

step F2: a second rate matching of the second-stage sidelink control information is calculated, and a transport block size of the PSSCH is calculated according to target overhead information and the second rate matching; or,

step F3: a first rate matching of the second-stage sidelink control information is calculated according to the first overhead information, and a transport block size of the PSSCH is calculated according to the first rate matching and the first overhead information;

wherein the target overhead information is the first overhead information or the second overhead information, and the second overhead information is the overhead information of the SL-PRS indicated by the second-stage sidelink control information.

It can be determined from steps F1 to F3 that the first overhead information of the SL-PRS indicated by one of the 1st-stage SCI, the higher-layer parameter and the pre-configured information is used for calculating the rate matching of the 2nd-stage SCI and/or the transport block size (TBS) of the PSSCH; or, the second overhead information of the SL-PRS

indicated by the 2nd-stage SCI is used to calculate the TBS of the PSSCH.

In addition, when receiving the SL-PRS, the following points need to be noted regarding the rate matching of the 2nd-stage SCI and the TBS calculation of the PSSCH:

(1) with regard to step F1 "a first rate matching of the second-stage sidelink control information is calculated according to the first overhead information, and a transport block size of the PSSCH is calculated according to the first rate matching":

when the first overhead information is indicated by the 1st-stage SCI, a receiving device first receives a PSCCH, decodes the 1st-stage SCI to determine the first overhead information, then calculates a first rate matching of the 2nd-stage SCI according to the first overhead information, then decodes the 2nd-stage SCI after determining the mapping situation of the 2nd-stage SCI in the PSSCH, and then calculates the TBS of the PSSCH according to the first rate matching, and decodes data in the PSSCH and receives an SL-PRS;

when the first overhead information is configured by the higher-layer parameter or pre-configured, the receiving device firstly receives the PSCCH, decodes the 1st-stage SCI, then calculates the first rate matching of the 2nd-stage SCI according to the first overhead information, then decodes the 2nd-stage SCI after determining the mapping situation of the 2nd-stage SCI in the PSSCH, then calculates the TBS of the PSSCH according to the first rate matching, and decodes the data in the PSSCH and receives the SL-PRS.

Here, the process of calculating the TBS of the PSSCH according to the first rate matching may be specifically as described in step H1 or H2 below.

(2) With regard to the step F2 "a second rate matching of the second-stage sidelink control information is calculated, and a transport block size of the PSSCH is calculated according to target overhead information and the second rate matching":

the receiving device first receives the PSCCH, decodes the 1st-stage SCI, then calculates the second rate matching of the 2nd-stage SCI, and decodes the 2nd-stage SCI after determining the mapping situation of the 2nd-stage SCI in the PSSCH, then calculates the TBS of the PSSCH according to target overhead information and the second rate matching, and decodes data in the PSSCH, and receives the SL-PRS.

(3) With regard to the step F3: "a first rate matching of the second-stage sidelink control information is calculated according to the first overhead information, and a transport block size of the PSSCH is calculated according to the first rate matching and the first overhead information":

when the first overhead information is indicated by the 1st-stage SCI, the receiving device first receives the PSCCH, decodes the 1st-stage SCI to determine the first overhead information, then calculates the first rate matching of the 2st-stage SCI, then decodes the 2st-stage SCI after determining the mapping situation of the 2st-stage SCI in the PSSCH, then calculates the transport block size of the PSSCH according to the first rate matching and the first overhead information, and decodes data in the PSSCH, and receives the SL-PRS;

when the first overhead information is configured by the higher-layer parameter or pre-configured, the receiving device firstly receives the PSCCH, decodes the 1st-stage SCI, then calculates the first rate matching of the 2st-stage SCI according to the first overhead information, then decodes the 2st-stage SCI after determining the mapping situation of the 2st-stage SCI in the PSSCH, then calculates the transport block size of the PSSCH according to the first rate matching and the first overhead information, and decodes data in the PSSCH, and receives the SL-PRS.

It should also be noted that, in a scenario of transmitting the SL-PRS, the transmitting device first calculates the rate matching of the 2nd-stage SCI, then calculates the TBS of the PSSCH, so that the total number of available REs of the PSSCH can be determined, and then after determining the number of REs mapped of the 2nd-stage SCI, and the TBS of the PSSCH, on the basis of the specific DMRS pattern, the PSCCH and the PSCCH DMRS are mapped, the PSSCH DMRS is mapped, and then the 2nd-stage SCI is mapped, and then the SL-PRS can be mapped.

The steps F1 to F3 are respectively introduced as follows:

With regard to step F1:

it can be determined from step F1 that the first rate matching of the 2nd-stage SCI can be calculated according to the first overhead information indicated by the 1nd-stage SCI, and then the TBS of the PSSCH can be calculated according to the first rate matching; or, the first rate matching of the 2nd-stage SCI may be calculated according to the first overhead information configured by the higher-layer parameter or the pre-configured information, and then the TBS of the PSSCH may be calculated according to the first rate matching.

In some embodiments of the present application, in the step F1, calculating the transport block size of the PSSCH according to the first rate matching includes:

step H1: the transport block size of the PSSCH is calculated according to the first rate matching and at least one of the second overhead information, the time-domain configuration information of the SL-PRS, and the frequency-domain configuration information of the SL-PRS;
or,

step H2: the transport block size of the PSSCH is calculated according to the first rate matching and the overhead information of the SL-PRS configured by the high-level parameter or pre-configured.

It can be determined from step H1 that, if the first overhead information indicated by one of the 1st-stage SCI, the higher-layer parameter and the pre-configured information is only used for calculating the first rate matching of the 2nd-stage SCI, then the TBS of the PSSCH can be calculated according to the first rate matching and in combination with at least one of the second overhead information indicated by the 2nd-stage SCI, the time-domain configuration information of the SL-PRS, and the frequency-domain configuration information of the SL-PRS.

It can be determined from step H2 that, if the first overhead information indicated by one of the 1st-stage SCI, the higher-layer parameter and the pre-configured information is only used for calculating the first rate matching of the 2st-stage SCI, then the TBS of the PSSCH can also be calculated according to the first rate matching in combination with other overhead information of the SL-PRS configured by the higher-layer parameter or pre-configured.

With regard to step F2,
it can be determined from step F2 that the existing rate matching calculation method (i.e. the method not combined with the overhead information of the SL-PRS) can be used to calculate the second rate matching of the 2nd-stage SCI, so as to calculate the TBS of the PSSCH according to the second rate matching and the first overhead information indicated by one of the 1nd-stage SCI, the higher-layer parameter, and the pre-configured information; or, an existing rate matching calculation method may also be used to calculate the second rate matching of the 2nd-stage SCI, so as to calculate the TBS of the PSSCH according to the second rate matching and the second overhead information indicated by the 2nd-stage SCI.

With regard to step F3,
it can be determined from step F3 that the first rate matching of the 2nd-stage SCI can be calculated according to the first overhead information indicated by one of the 1nd-stage SCI, the higher-layer parameter and the pre-configured information, and then the TBS of the PSSCH can be calculated according to the first rate matching and the first overhead information.

In conclusion, it can be determined from steps F1 to F3 that the embodiments of the present application provide a rate matching calculation method for the 2nd-stage SCI and a calculation method for a TBS of a PSSCH after introducing an SL-PRS into a shared resource pool.

The calculation method for calculating the first rate matching, the second rate matching and the TBS of the PSSCH will be described in details below with reference to the embodiments 4 to 6.

Embodiment 4: a method for calculating the first rate matching:

calculating the rate matching of the 2nd-stage SCI is to calculate the number of coded modulation symbols $Q'_{SCI2}$ (i.e. the number of occupied REs) of the 2nd-stage SCI;

in addition, the number of coded modulation symbols $Q'_{SCI2}$ of the 2nd-stage SCI may be calculated according to the formula (1):

$$Q'_{SCI2} = \min \left\{ \left\lceil \frac{(O_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma \quad (1)$$

where, $O_{SCI2}$ represents the number of bits of the 2nd-stage SCI;

$L_{SCI2}$ indicates 24 bits CRC bits of the 2nd-stage SCI;

$\beta_{offset}^{SCI2}$ is indicated by the 1st-stage SCI.

$$M_{sc}^{SCI2}(l) = M_{sc}^{PSSCH}(l) - M_{sc}^{PSCCH}(l).$$

$M_{sc}^{PSSCH}(l)$ indicates that the number of subcarriers is included in the PSSCH transmission bandwidth.

$M_{sc}^{PSCCH}(l)$ represents the number of PSCCH and PSCCH DMRS subcarriers associated with the PSSCH on a $l$ th orthogonal frequency division multiplexing (OFDM) symbol; $M_{sc}^{SCI2}(l)$

represents the number of resource elements (RE) that can be used for 2nd-stage SCI transmission on an OFDM symbol $l$ for PSSCH transmission, where $l = 0,1,2 \cdots, N_{symbol}^{PSSCH} - 1$.

$N_{symbol}^{PSSCH} = N_{symb}^{sh} - N_{symb}^{PSFCH} - N_{symb}^{SL-PRS}$, $N_{symb}^{sh} =$ sl-lengthSymbols -2   (i.e. sl-lengthSymbols minus 2), wherein sl-lengthSymbols is a higher-layer parameter and represents the number of sidelink symbols in a slot.

If the higher-layer parameter physical sidelink feedback channel period (sl-PSFCH-Period) = 2 or 4, then $N_{symb}^{PSFCH} = 3$ when the PSFCH overhead indication domain in the SCI format 1-A (i.e. format 1-A of the 1st-stage SCI) indicates "1"; otherwise, $N_{symb}^{PSFCH} = 0$; if the higher-layer parameter sl-PSFCH-Period = 0, then $N_{symb}^{PSFCH} = 0$; if the higher-layer parameter sl-PSFCH-Period =1, then $N_{symb}^{PSFCH} = 3$.

The value of $N_{symb}^{SL-PRS}$ may be determined using one of the following method:

(1) determined by the SL-PRS overlapping indication domain in the SCI format 1-A (i.e. the 1st-stage SCI);

(2) configured by a higher-layer parameter or pre-configured;

(3) preset a specific value on the basis of the DMRS pattern.

That is, $N_{symb}^{SL-PRS}$ represents the first overhead information.

$\gamma$ represents the number of the remaining unoccupied REs in a resource block (RB) where the last coding symbol of the 2nd-stage SCI is located. It should be noted that, when the rate matching of the 2nd-stage SCI in the TBS is calculated, it is assumed that $\gamma=0$; if the 2nd-stage SCI is a 2 layers mapping, the layer 2 mapping should be replicated first.

R represents a coding rate indicated by "Modulation and coding scheme" information domain in the SCI format 1-A;

$\alpha$ is a higher-layer parameter scaling parameter (sl-Scaling) configuration.

Embodiment 5: a method for calculating the second rate matching:

calculating the rate matching of the 2nd-stage SCI is to calculate the number $Q'_{SCI2}$ of coded modulation symbols of the 2nd-stage SCI;

in addition, the number of coded modulation symbols $Q'_{SCI2}$ of the 2nd-stage SCI may be calculated according to the formula (1):

$$Q'_{SCI2} = \min\left\{\left\lceil\frac{(O_{SCI2}+L_{SCI2})\cdot\beta_{offset}^{SCI2}}{Q_m^{SCI2}\cdot R}\right\rceil, \left\lceil\alpha\sum_{l=0}^{N_{symbol}^{PSSCH}-1} M_{sc}^{SCI2}(l)\right\rceil\right\} + \gamma \quad (1)$$

where, $O_{SCI2}$ represents the number of bits of the 2nd-stage SCI;

$L_{SCI2}$ indicates 24 bits CRC bits of the 2nd-stage SCI;

$\beta_{offset}^{SCI2}$ is indicated by the 1st-stage SCI;

$$M_{sc}^{SCI2}(l) = M_{sc}^{PSSCH}(l) - M_{sc}^{PSCCH}(l).$$

$M_{sc}^{PSSCH}(l)$ indicates that the number of subcarriers is included in the PSSCH transmission bandwidth;

$M_{sc}^{PSCCH}(l)$ represents the number of PSCCH and PSCCH DMRS subcarriers associated with the PSSCH on a *l*th OFDM symbol;

$M_{sc}^{SCI2}(l)$ represents the number of REs, that can be used for the 2nd-stage SCI transmission, on the OFDM symbol *l* for PSSCH transmission, where $l = 0,1,2 \cdots, N_{symbol}^{PSSCH} - 1$.

$N_{symbol}^{PSSCH} = N_{symb}^{sh} - N_{symb}^{PSFCH}$ ; $N_{symb}^{sh} =$ sl-lengthSymbols $-2$, wherein sl-lengthSymbols is a higher-layer parameter and represents the number of sidelink symbols in a slot.

If the higher-layer parameter sl-PSFCH-Period= 2 or 4, then $N_{symb}^{PSFCH} = 3$ when the PSFCH overload indication domain in the SCI format 1-A indicates "1"; otherwise, $N_{symb}^{PSFCH} = 0$; if the higher-layer parameter sl-PSFCH-Period = 0, then $N_{symb}^{PSFCH} = 0$; if the higher-layer parameter sl-PSFCH-Period =1, then $N_{symb}^{PSFCH} = 3$.

$\gamma$ represents the number of remaining unoccupied REs in the RB where the last coding symbol of the 2nd-stage SCI is located;

R represents a coding rate indicated by a "Modulation and coding scheme" information domain in the SCI format 1-A;

$\alpha$ is a higher-layer parameter sl-Scaling configuration.

It should be noted that in the embodiment 4 and the embodiment 5, the calculation formula for $N_{symbol}^{PSSCH}$ is different.

Embodiment 6: a method for calculating the TBS of the PSSCH without considering the overhead information of the SL-PRS, including steps 6.1 to 6.3 as follows:

step 6.1: the total number $N'_{RE}$ of REs allocated to the PSSCH in a physical resource block (PRB) is calculated according to formula (2):

$$N'_{RE} = N_{sc}^{RB}(N_{symb}^{sh} - N_{symb}^{PSFCH}) - N_{oh}^{PRB} - N_{RE}^{DMRS} \qquad (2)$$

where $N_{sc}^{RB} = 12$ represents that one RB includes 12 subcarriers.

$N_{symb}^{sh} =$ sl-LengthSymbols $-2$, wherein sl-LengthSymbols is a parameter provided by the higher layer and is used for indicating the number of sidelink symbols in a slot.

If the higher-layer sl-PSFCH-Period=2 or 4, then $N_{symb}^{PSFCH} = 3$ when the PSFCH overhead indication domain in the SCI format 1-A indicates "1"; otherwise, $N_{symb}^{PSFCH} = 0$; if the higher-layer parameter sl-PSFCH-Period = 0, then $N_{symb}^{PSFCH} = 0$; if the higher-layer parameter sl-PSFCH-Period =1, then $N_{symb}^{PSFCH} = 3$. $N_{oh}^{PRB}$ represents an overhead value indicated by the higher-layer parameter sidelink overhead information (sl-X-Overhead). $N_{RE}^{DMRS}$ is determined according to higher-layer parameter SL-shared channel DMRS time-domain pattern list configuration information (sl-PSSCH-DMRS-TimePatternList) and table 5:

Table 5 Value of $N_{RE}^{DMRS}$

| sl-PSSCH-DMRS-TimePatternList | $N_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

Step 6.2: the number $N_{RE}$ of all REs allocated to the PSSCH is calculated according to formula (3):

$$N_{RE} = N'_{RE} \cdot n_{PRB} - N_{RE}^{SCI,1} - N_{RE}^{SCI,2} \quad (3)$$

where $n_{PRB}$ represents the total number of PRBs occupied by the PSSCH;

$N_{RE}^{SCI,1}$ represents the total number of REs occupied by the PSCCH and the PSCCH DMRS; $N_{RE}^{SCI,2}$ represents the number $Q'_{SCI2}$ (i.e. calculated $Q'_{SCI2}$ in Embodiment 4 or 5) of coded modulation symbols generated for the transmission of the 2$^{nd}$-stage SCI.

Step 7.3: the TBS of the PSSCH is calculated according to $N_{RE}$ and $Q'_{SCI2}$.

Embodiment 7: a method 1 for calculating the TBS of the PSSCH considering the overhead information of the SL-PRS, including steps 7.1 to 7.3 as follows:

step 7.1: the total number $N'_{RE}$ of REs allocated to the PSSCH in a physical resource block (PRB) is calculated according to formula (4):

$$N'_{RE} = N_{sc}^{RB}(N_{symb}^{sh} - N_{symb}^{PSFCH} - N_{symb}^{SL-PRS}) - N_{oh}^{PRB} - N_{RE}^{DMRS} \quad (4)$$

where $N_{sc}^{RB}=12$ represents that one RB includes 12 subcarriers.

$N_{symb}^{sh}=$ sl-LengthSymbols -2 , wherein sl-LengthSymbols is a parameter provided by the higher layer and is used for indicating the number of sidelink symbols in a slot.

If the higher-layer sl-PSFCH-Period=2 or 4, then $N_{symb}^{PSFCH} = 3$ when the PSFCH overhead indication domain in the SCI format 1-A indicates "1"; otherwise, $N_{symb}^{PSFCH} = 0$ ; if the higher-layer parameter sl-PSFCH-Period = 0, then $N_{symb}^{PSFCH} = 0$ ; if the higher-layer parameter sl-PSFCH-Period =1, then $N_{symb}^{PSFCH} = 3$ .

The value of $N_{symb}^{SL-PRS}$ may be determined using one of the following method:

(1) determined by means of an SL-PRS overhead indication domain or an SL-PRS time-domain symbol number information in the 1$^{st}$-stage SCI or the 2$^{st}$-stage SCI;

(2) configured by a higher-layer parameter or pre-configured;

(3) preset a specific value on the basis of the DMRS pattern.

That is, $N_{symb}^{SL-PRS}$ represents the overhead information of the SL-PRS;

$N_{oh}^{PRB}$ represents an overhead value indicated by the higher-layer parameter sl-x-Overhead;

$N_{RE}^{DMRS}$ is determined according to the higher-layer parameter sl-PSSCH-DMRS-TimePatternList and table 5.

Step 7.2: the number $N_{RE}$ of all REs allocated to the PSSCH is calculated according to formula (3):

$$N_{RE} = N'_{RE} \cdot n_{PRB} - N_{RE}^{SCI,1} - N_{RE}^{SCI,2} \quad (3)$$

where $n_{PRB}$ represents the total number of PRBs occupied by the PSSCH;

$N_{RE}^{SCI,1}$ represents the total number of REs occupied by the PSCCH and the PSCCH DMRS;

$N_{RE}^{SCI,2}$ represents the number $Q'_{SCI2}$, (i.e. calculated $Q'_{SCI2}$ in Embodiment 4 or 5) of coded modulation symbols generated for the transmission of the 2nd-stage SCI.

Step 7.3: the TBS of the PSSCH is calculated according to $N_{RE}$ and $Q'_{SCI2}$.

It should be noted that, in embodiment 7 and embodiment 6, the calculation formula for $N'_{RE}$ is different.

Embodiment 8: a method 2 for calculating the TBS of the PSSCH considering the overhead information of the SL-PRS, including steps 8.1 to 8.3 as follows:

Step 8.1: the total number $N'_{RE}$ of REs allocated to the PSSCH in the PRB is calculated according to formula (5):

$$N'_{RE} = N_{sc}^{RB}(N_{symb}^{sh} - N_{symb}^{PSFCH} - N_{symb}^{SL-PRS}/Num\_comb) - N_{oh}^{PRB} - N_{RE}^{DMRS} \quad (5)$$

where $N_{sc}^{RB}=12$ represents that one RB includes 12 subcarriers;

$N_{symb}^{sh}$= sl-LengthSymbols -2 , wherein sl-LengthSymbols is a parameter provided by the higher layer and is used for indicating the number of sidelink symbols in a slot.

If the higher-layer sl-PSFCH-Period=2 or 4, then $N_{symb}^{PSFCH} = 3$ when the PSFCH overhead indication domain in the SCI format 1-A indicates "1"; otherwise, $N_{symb}^{PSFCH} = 0$ ; if the higher-layer parameter sl-PSFCH-Period = 0, then $N_{symb}^{PSFCH} = 0$ ; if the higher-layer parameter sl-PSFCH-Period =1, then $N_{symb}^{PSFCH} = 3$ .

The value of $N_{symb}^{SL-PRS}$ may be determined using one of the following method:

(1) determined by means of an SL-PRS overhead indication domain or an SL-PRS time-domain symbol number information in the 1st-stage SCI or the 2st-stage SCI;

(2) configured by a higher-layer parameter or pre-configured;

(3) preset a specific value on the basis of a DMRS pattern.

That is, $N_{symb}^{SL-PRS}$ represents the overhead information of the SL-PRS;

Num_comb is indicated by 1st-stage SCI or 2nd-stage SCI, or configured by a higher-layer parameter or pre-configured, and represents a comb size used in the SL-PRS; wherein if comb_size≥6, it is possible to support multiplexing of data and the SL-PRS on the same symbol;

it can be additionally defined that only when comb_size$\geq$6, Num_comb = comb_size; otherwise, Num_comb = 1;

$N_{oh}^{PRB}$   represents an overhead value indicated by the higher-layer parameter sl-x-Overhead;

$N_{RE}^{DMRS}$   is determined according to the higher-layer parameter sl-PSSCH-DMRS-TimePatternList and table 1.

Step 8.2: the number $N_{RE}$ of all REs allocated to the PSSCH is calculated according to formula (3):

$$N_{RE} = N'_{RE} \cdot n_{PRB} - N_{RE}^{SCI,1} - N_{RE}^{SCI,2} \quad (3)$$

where $n_{PRB}$ represents the total number of PRBs occupied by the PSSCH;

$N_{RE}^{SCI,1}$   represents the total number of REs occupied by the PSCCH and the PSCCH DMRS;

$N_{RE}^{SCI,2}$   represents the number $Q'_{SCI2}$ (i.e. calculated $Q'_{SCI2}$ in Embodiment 4 or 5) of coded modulation symbols generated for the transmission of the 2nd-stage SCI.

That is, the calculation process in step 7.2 is the same as that in step 5.2.

Step 8.3: the TBS of the PSSCH is calculated according to $N_{RE}$ and $Q'_{SCI2}$.

It should also be noted that, in order to maintain backward compatibility, no matter whether the transport block (i.e. the sidelink transmission) includes the SL-PRS or not, it is unnecessary to consider the overhead problem of the SL-PRS, and the original rate matching calculation process of the 2nd-stage SCI (i.e. the embodiment 5) and/or the TBS calculation process of the PSSCH (i.e. the embodiment 6) are directly used.

In some embodiments of the present application, the symbol length N of the SL-PRS is configured according to at least one of the following:

the number of symbols of the PSCCH;

the number of symbols of the PSSCH;

DMRS pattern information;

time-frequency configuration information of the CSI-RS; and

time-frequency configuration information of the PT-RS; and

the number of symbols of physical sidelink feedback channels (PSFCH).

In some embodiments of the present application, transmitting or receiving the SL-PRS includes: receiving or transmitting the SL-PRS on at least one of the following conditions:

the pattern of the second-stage sidelink control information being a preset pattern;

the first-stage sidelink control information indicating the first overhead information of the SL-PRS; and

the first-stage sidelink control information indicating that the current transmitting or receiving includes the SL-PRS.

The preset pattern may be, for example, a 2D pattern.

It can be determined therefrom that if the pattern of the 2nd-stage SCI is a preset pattern (for example, a 2D pattern), or the 1nd-stage SCI indicates the first overhead information of the SL-PRS, or the 1nd-stage SCI indicates that the current transmission includes the SL-PRS, then the transmitting device sends the SL-PRS; if the pattern of the 2nd-stage SCI is a preset pattern (for example, a 2D pattern), or the 1nd-stage SCI indicates the first overhead information of the SL-PRS, or the 1nd-stage SCI indicates that the current transmission includes the SL-PRS, the receiving device receives the SL-PRS.

In conclusion, in some embodiments of the present application, the processes for SL-PRS time-domain resource mapping, 2nd-stage SCI rate matching calculation, and PSSCH TBS calculation are identical for the SL-PRS transmitting device and the SL-PRS receiving device.

It should be understood that, the various embodiments described above in the present application can be arbitrarily combined. The following provides an example illustration of the overall application process of the above embodiments, which are 9.1 to 9.5 as follows:

step 9.1: the rate matching of the 2nd-stage SCI is calculated;

the rate matching of the 2nd-stage SCI may be calculated by adopting the solution of the embodiment 4 or the embodiment 5.

Step 9.2: the TBS of the PSSCH is calculated, so as to determine the number of bits for carrying data of the PSSCH;
the TBS of the PSSCH may be calculated by using one of the solutions in the embodiment 6, the embodiment 7 and the embodiment 8.

Step 9.3: after determining the number of REs mapped for the 2nd-stage SCI, and the TBS of the PSSCH, the specific DMRS pattern is used to map the PSCCH and PSCCH DMRS, then map the PSSCH DMRS, and then map the 2nd-stage SCI.

Step 9.4: the SL-PRS is mapped;
the SL-PRS may be mapped by using one of the methods in embodiment 1, embodiment 2, and embodiment 3.

Step 9.5: the data REs of the PSSCH is mapped.

The order of steps 9.4 and 9.5 is not mandatory.

In conclusion, the embodiments of the present application solve the following problems:

(1) the rate matching calculation issue for the 2nd-stage SCI after introducing SL-PRS transmission in the shared resource pool is solved; otherwise, it would affect the encoding and decoding of the 2nd-stage SCI;

(2) the TBS calculation issue for the PSSCH after introducing SL-PRS transmission in the shared resource pool is solved; otherwise, it would affect the problem of inconsistent TBS calculation results during initial transmission and retransmission combination;

(3) an SL-PRS mapping rule is introduced into the shared resource pool, thereby solving problems such as SL-PRS resource indication and compatibility.

The embodiments of the present application provide a method for transmitting or receiving channel. The execution subject may be an apparatus for transmitting or receiving channel. In some embodiments of the present application, the apparatus for transmitting or receiving channel is taken as an example for executing the method for transmitting or receiving channel, in order to describe the apparatus for transmitting or receiving channel provided in the embodiments of the present application.

According to a second aspect, an embodiment of the present application provides an apparatus for transmitting or receiving channel. As shown in Fig. 4, the apparatus for transmitting or receiving channel 400 includes the following components: a transmitting or receiving component 401, configured to transmit or receive a physical sidelink control channel (PSCCH) and a physical sidelink shared channel (PSSCH), or transmit or receive the PSCCH, the PSSCH and a sidelink-positioning reference signal (SL-PRS);

wherein the PSCCH is used for carrying first-stage sidelink control information, the first-stage sidelink control information is used for scheduling at least one of the PSSCH, second-stage sidelink control information and the SL-PRS;

the PSSCH carries data and the second-stage sidelink control information, the second-stage sidelink control information is used to decode the PSSCH and/or to schedule the SL-PRS.

In some embodiments of the present application, the transmitting or receiving component 401 includes:

a resource mapping sub-component, configured to determine, according to time-domain configuration information of an SL-PRS, a target time-domain resource which is used for transmitting or receiving the SL-PRS in a first resource, wherein the first resource is a time-domain resource, located after a second resource, in a time unit of a shared resource pool; and the second resource is a time-domain resource used for transmitting or receiving second-stage sidelink control information;

a transmitting or receiving sub-component, configured to transmit or receive the SL-PRS on the target time-domain resource.

In some embodiments of the present application, the time-domain configuration information of the SL-PRS includes a symbol length N of the SL-PRS. The resource mapping sub-component includes:

a resource mapping unit, configured to determine continuous M symbols in the first resource that do not overlap with a third resource, so as to obtain the target time-domain resource,

wherein the third resource is a resource used for transmitting or receiving a first object, the value of M is N or N+k1, and N and k1 are respectively integers greater than zero.

In some embodiments of the present application, the first object includes a demodulation reference signal (DMRS) and/or a second object.

In some embodiments of the present application, the resource mapping unit includes:

a first resource mapping subunit, configured to determine a target symbol in a target symbol interval on the first resource, and determine the target symbol as the target time-domain resource;

wherein the target symbol interval includes a first symbol interval, symbol intervals between every two DMRS with an index difference of k2 on the first resource, and a second symbol interval, wherein the first symbol interval is an symbol interval between a reference symbol in the first resource and a symbol used for transmitting or receiving the first DMRS; the second symbol interval is a symbol interval between a symbol used for transmitting or receiving the last DMRS of the first resource and a last symbol of the first resource, and k2 is a preset step size;

the first DMRS is a DMRS located on the first resource, behind the reference symbol in the time domain, and closest to the reference symbol;

the target symbol is M continuous symbols which do not overlap with a resource used for transmitting or receiving the second object, or the target symbol is M continuous symbols.

In some embodiments of the present application, the first resource mapping subunit is specifically configured to:

determine whether there is a target symbol in the first symbol interval;

in cases where there is a target symbol in the first symbol interval, determine the target symbol of the first symbol interval as the target time-domain resource;

in cases where there is no target symbol in the first symbol interval, set the value of Num as the index of the first DMRS;

determine whether the DMRS with an index Num is the last DMRS on the first resource;

in cases where the DMRS with the index Num is not the last DMRS on the first resource, determine whether there is a target symbol in a third symbol interval between a DMRS with an index Num on the first resource and a DMRS with an index Num+k2; in cases where there is a target symbol in the third symbol interval, determine the target symbol in the third symbol interval as the target time-domain resource; and in cases where there is no target symbol in the third symbol interval, set Num to the current value increased by k2, and return to the step of determining whether the DMRS with the index Num is the last DMRS on the first resource;

in cases where the DMRS with the index Num is the last DMRS on the first resource, determine whether there is a target symbol in the second symbol interval, and in cases where there is a target symbol in the second symbol interval, determine the first symbol of the second symbol interval as the target time-domain resource;

in cases where there is no target symbol in the second symbol interval, determine that there is a configuration error in N.

In some embodiments of the present application, the time-domain configuration information of the SL-PRS further includes a time-domain start symbol position of the SL-PRS; the resource mapping unit includes:

a second resource mapping subunit, configured to determine M continuous symbols in the first resource according to a starting symbol position of the SL-PRS and a symbol length N of the SL-PRS, so as to obtain the target time-domain resource.

In some embodiments of the present application, the time-domain configuration information of the SL-PRS has an association relationship with pattern information of the DMRS.

In some embodiments of the present application, the first information indicates at least one of the following:

identification information of resources of the SL-PRS;

the symbol length N of the SL-PRS; and

frequency-domain configuration information of the SL-PRS;

wherein the first information includes the first-stage sidelink control information and/or the second-stage sidelink control information.

In some embodiments of the present application, the first information indicates at least one of the following:

identification information of resources of the SL-PRS;

a time-domain start symbol position of the SL-PRS;

the symbol length N of the SL-PRS; and

frequency-domain configuration information of the SL-PRS;

wherein the first information includes the first-stage sidelink control information and/or the second-stage sidelink control information.

In some embodiments of the present application, first overhead information of the SL-PRS is indicated by one of the following information:

the first-stage sidelink control information;

higher-layer parameters; and

pre-configured information.

In some embodiments of the present application, the apparatus further includes:

a first calculation component, configured to calculate a first rate matching of the second-stage sidelink control information according to the first overhead information, and calculate a transport block size of the PSSCH according to the first rate matching;
or,

a second calculation component, configured to calculate a second rate matching of the second-stage sidelink control information, and calculate a transport block size of the PSSCH according to target overhead information and the second rate matching;
or,

a third calculation component, configured to calculate a first rate matching of the second-stage sidelink control information according to the first overhead information, and calculate a transport block size of the PSSCH according to the first rate matching and the first overhead information;

wherein the target overhead information is the first overhead information or a second overhead information, and the second overhead information is the overhead information of the SL-PRS indicated by the second-stage sidelink control information.

In some embodiments of the present application, the first calculation component calculating the transport block size of the PSSCH according to the first rate matching is specifically used for:

calculating the transport block size of the PSSCH according to the first rate matching and at least one of the second overhead information, a time-domain configuration information of the SL-PRS, and a frequency-domain configuration information of the SL-PRS;
or,

calculating the transport block size of the PSSCH according to the first rate matching and the overhead information of the SL-PRS configured by the higher-layer parameter or pre-configured.

In some embodiments of the present application, the first-stage sidelink control information explicitly indicates the first overhead information, or the first-stage sidelink control information carries pattern information of the first overhead information;

wherein the pattern information of the first overhead information, and second information, have an association relationship with the first overhead information;

the second information includes at least one of DMRS pattern information, the number of symbols of the PSCCH, the number of symbols of the PSSCH, time-frequency configuration information of a phase tracking reference signal (PT-RS) and time-frequency configuration information of a channel state information reference signal (CSI-RS).

In some embodiments of the present application, the symbol length N of the SL-PRS is configured according to at least one of the following:

the number of symbols of the PSCCH;

the number of symbols of the PSSCH;

DMRS pattern information;

time-frequency configuration information of the CSI-RS;

time-frequency configuration information of the PT-RS; and

the number of symbols of physical sidelink feedback channels (PSFCH).

In some embodiments of the present application, transmitting or receiving the SL-PRS includes: receiving or transmitting the SL-PRS on at least one of the following conditions:

the pattern of the second-stage sidelink control information being a preset pattern;

the first-stage sidelink control information indicating the first overhead information of the SL-PRS; and

the first-stage sidelink control information indicating that the current transmitting or receiving includes the SL-PRS.

The apparatus for transmitting or receiving channel provided in the embodiments of the present application can implement the processes implemented in the method embodiments in Fig. 2 to Fig. 3, and can achieve the same technical effect, which will be not repeated herein in order to avoid repetition.

As shown in Fig. 5, embodiments of the present application also provide a communication device 500, including a processor 501 and a memory 502, wherein the memory 502 stores a program or instruction that can run on the processor 501; for example, when the communication device 500 is a terminal, the program or instruction is executed by the processor 501 to implement the steps of the embodiments of the method for transmitting or receiving channel, and the same technical effect can be achieved. When the communication device 500 is a network side device, the steps of the embodiments of the method for transmitting or receiving channel are implemented when the program or instruction is executed by the processor 501, and the same technical effect can be achieved. To avoid repetition, details are not described herein again.

The embodiments of the present application further provide a readable storage medium. The readable storage medium stores a program or an instruction which, when executed by a processor, causes the processor to implement the processes of the embodiments of the method for transmitting or receiving channel, and can achieve the same technical effect, which will be not repeated herein in order to avoid repetition.

The processor is the processor in the terminal in the foregoing embodiment. The readable storage medium includes a computer readable storage medium, such as a computer read-only memory (ROM), a random access memory (RAM), a magnetic disk, or an optical disk. In some embodiments of the present application, the readable storage medium may be a non-transitory readable storage medium.

The embodiments of the present application further provide a chip which includes a processor and a communication interface; the communication interface is coupled to the processor; the processor is configured to run a program or an instruction to implement the processes of the foregoing embodiments of the method for transmitting or receiving channel, and the same technical effect can be achieved. To avoid repetition, details are not described herein again.

It should be understood that the chip mentioned in the embodiment of the present application may also be referred to as a system on chip, a system chip, a chip system, or a system on a chip.

Embodiments of the present application further provide a computer program/program product which is stored in a storage medium; the computer program/program product is executed by at least one processor to implement the processes of the embodiments of the method for transmitting or receiving channel, and the same technical effect can be achieved. To avoid repetition, details are not described herein again.

It should also be noted that in the text, the terms "contain", "include", or any other variations thereof are intended to cover a non-exclusive inclusion, so that a process, a method, an article, or an apparatus that comprises a series of elements not only comprises those elements, but also comprises other elements that are not explicitly listed, or further comprises inherent elements of the process, the method, the article, or the apparatus. Without further limitation, an element defined by a sentence "comprise a ..." does not exclude other same elements existing in a process, a method, an article, or an apparatus that comprises the element. In addition, it should be noted that, the scope of the methods and apparatuses in the implementations of the present application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

From the description of the described embodiments, a person skilled in the art would have been able to clearly understand that the method in the described embodiments may be implemented by using a computer software product and necessary general hardware platforms, and of course may also be implemented using hardware. The software product is stored in a storage medium (such as a ROM, a RAM, a magnetic disk, or an optical disc), and includes several instructions for causing a terminal or a network-side device to perform the methods described in the embodiments of the present application.

The foregoing describes the embodiments of the present application with reference to the accompanying drawings. However, the present application is not limited to the foregoing specific implementations. These specific implementations are merely illustrative rather than restrictive. Inspired by the present application, persons of ordinary skill in the art may develop many other forms of implementations without departing from the essence of the present application and the protection scope of the claims, and all such implementations shall fall within the protection scope of the present application.

**Claims**

1. A method for transmitting or receiving channel, comprising:

   transmitting or receiving a physical sidelink control channel, PSCCH, and a physical sidelink shared channel, PSSCH, or transmitting or receiving the PSCCH, the PSSCH and a sidelink-positioning reference signal, SL-PRS;
   wherein the PSCCH is used for carrying first-stage sidelink control information, the first-stage sidelink control information is used for scheduling at least one of the PSSCH, second-stage sidelink control information and the SL-PRS;
   the PSSCH carries data and the second-stage sidelink control information, the second-stage sidelink control information is used to decode the PSSCH and/or to schedule the SL-PRS.

2. The method as claimed in claim 1, wherein transmitting or receiving the SL-PRS comprises:

   determining, according to time-domain configuration information of an SL-PRS, a target time-domain resource which is used for transmitting or receiving the SL-PRS in a first resource, wherein the first resource is a time-domain resource, located after a second resource, in a time unit of a shared resource pool, and the second resource is a time-domain resource used for transmitting or receiving second-stage sidelink control information; transmitting or receiving the SL-PRS on the target time-domain resource.

3. The method as claimed in claim 2, wherein the time-domain configuration information of the SL-PRS comprises a symbol length N of the SL-PRS;
determining, according to the time-domain configuration information of the SL-PRS, the target time-domain resource which is used for transmitting or receiving the SL-PRS, comprises:

determining continuous M symbols in the first resource that do not overlap with a third resource, to obtain the target time-domain resource,
wherein the third resource is a resource used for transmitting or receiving a first object, a value of M is N or N+k1, and N and k1 are respectively integers greater than zero.

4. The method as claimed in claim 3, wherein the first object comprises a demodulation reference signal, DMRS, and/or a second object.

5. The method as claimed in claim 4, wherein determining continuous M symbols in the first resource that do not overlap with the third resource, to obtain the target time-domain resource, comprises:

determining a target symbol in a target symbol interval on the first resource, and determining the target symbol as the target time-domain resource;
wherein the target symbol interval comprises a first symbol interval, symbol intervals between every two DMRS with an index difference of k2 on the first resource, and a second symbol interval, wherein the first symbol interval is an symbol interval between a reference symbol in the first resource and a symbol used for transmitting or receiving the first DMRS, the second symbol interval is a symbol interval between a symbol used for transmitting or receiving the last DMRS in the first resource and a last symbol of the first resource, and k2 is a preset step size;
the first DMRS is a DMRS located on the first resource, behind the reference symbol in time domain, and closest to the reference symbol;
the target symbol is M continuous symbols which do not overlap with a resource used for transmitting or receiving the second object, or the target symbol is M continuous symbols.

6. The method as claimed in claim 5, wherein determining the target symbol in the target symbol interval on the first resource, and determining the target symbol as the target time-domain resource, comprise:

determining whether there is the target symbol in the first symbol interval;
in cases where there is the target symbol in the first symbol interval, determining the target symbol of the first symbol interval as the target time-domain resource;
in cases where there is no target symbol in the first symbol interval, setting a value of Num as an index of the first DMRS;
determining whether DMRS with an index Num is the last DMRS on the first resource;
in cases where the DMRS with the index Num is not the last DMRS on the first resource, determining whether there is the target symbol in a third symbol interval between a DMRS with an index Num on the first resource and a DMRS with an index Num+k2; in cases where there is the target symbol in the third symbol interval, determining the target symbol in the third symbol interval as the target time-domain resource; and in cases where there is no target symbol in the third symbol interval, setting Num to a current value increased by k2, and returning to a step of determining whether the DMRS with the index Num is the last DMRS on the first resource;
in cases where the DMRS with the index Num is the last DMRS on the first resource, determining whether there is the target symbol in the second symbol interval, and in cases where there is the target symbol in the second symbol interval, determining the first symbol of the second symbol interval as the target time-domain resource;
in cases where there is no target symbol in the second symbol interval, determining that there is a configuration error in N.

7. The method as claimed in claim 3 or 4, wherein the time-domain configuration information of the SL-PRS further comprises a time-domain start symbol position of the SL-PRS;
determining continuous M symbols in the first resource that do not overlap with the third resource, to obtain the target time-domain resource, comprises:

determining M continuous symbols in the first resource according to a start symbol position of the SL-PRS and a symbol length N of the SL-PRS, to obtain the target time-domain resource.

8. The method as claimed in any one of claims 2 to 7, wherein the time-domain configuration information of the SL-PRS has an association relationship with pattern information of DMRS.

9. The method as claimed in any of claims 3 to 6, wherein a first information indicates at least one of the following:

   identification information of resources of the SL-PRS;
   the symbol length N of the SL-PRS; and
   frequency-domain configuration information of the SL-PRS;
   wherein the first information comprises the first-stage sidelink control information and/or the second-stage sidelink control information.

10. The method as claimed in claim 7, wherein a first information indicates at least one of the following:

    identification information of resources of the SL-PRS;
    the time-domain start symbol position of the SL-PRS;
    the symbol length N of the SL-PRS; and
    frequency-domain configuration information of the SL-PRS;
    wherein the first information comprises the first-stage sidelink control information and/or the second-stage sidelink control information.

11. The method as claimed in any one of claims 1 to 10, wherein first overhead information of the SL-PRS is indicated by one of the following information:

    the first-stage sidelink control information;
    higher-layer parameters; and
    pre-configured information.

12. The method as claimed in claim 11, further comprising:

    calculating a first rate matching of the second-stage sidelink control information according to the first overhead information, and calculating a transport block size of the PSSCH according to the first rate matching;
    or,
    calculating a second rate matching of the second-stage sidelink control information, and calculating a transport block size of the PSSCH according to target overhead information and the second rate matching;
    or,
    calculating a first rate matching of the second-stage sidelink control information according to the first overhead information, and calculating a transport block size of the PSSCH according to the first rate matching and the first overhead information;
    wherein the target overhead information is the first overhead information or a second overhead information, and the second overhead information is overhead information of the SL-PRS indicated by the second-stage sidelink control information.

13. The method as claimed in claim 12, wherein calculating the transport block size of the PSSCH according to the first rate matching comprises:

    calculating the transport block size of the PSSCH according to the first rate matching and at least one of the second overhead information, a time-domain configuration information of the SL-PRS, and a frequency-domain configuration information of the SL-PRS;
    or,
    calculating the transport block size of the PSSCH according to the first rate matching and the overhead information of the SL-PRS configured by the higher-layer parameter or pre-configured.

14. The method as claimed in any one of claims 11 to 13, wherein the first-stage sidelink control information explicitly indicates the first overhead information, or the first-stage sidelink control information carries pattern information of the first overhead information;

wherein the pattern information of the first overhead information, and second information, have an association relationship with the first overhead information;

the second information comprises at least one of DMRS pattern information, number of symbols of the PSCCH, number of symbols of the PSSCH, time-frequency configuration information of a phase tracking reference signal, PT-RS, and time-frequency configuration information of a channel state information reference signal, CSI-RS.

15. The method as claimed in any one of claims 3 to 7, wherein the symbol length N of the SL-PRS is configured according to at least one of:

    number of symbols of the PSCCH;
    number of symbols of the PSSCH;
    DMRS pattern information;
    time-frequency configuration information of the CSI-RS;
    time-frequency configuration information of the PT-RS; and
    number of symbols of physical sidelink feedback channels, PSFCH.

16. The method as claimed in any of claims 1 to 15, wherein transmitting or receiving the SL-PRS comprises:
    receiving or transmitting the SL-PRS on at least one of the following conditions:

    pattern of the second-stage sidelink control information being a preset pattern;
    the first-stage sidelink control information indicating a first overhead information of the SL-PRS; and
    the first-stage sidelink control information indicating that current transmitting or receiving comprises the SL-PRS.

17. An apparatus for transmitting or receiving channel, wherein the apparatus comprises:

    a transmitting or receiving component, configured to transmit or receive a physical sidelink control channel, PSCCH, and a physical sidelink shared channel, PSSCH, or transmit or receive the PSCCH, the PSSCH and a sidelink-positioning reference signal, SL-PRS;
    wherein the PSCCH is used for carrying first-stage sidelink control information, the first-stage sidelink control information is used for scheduling at least one of the PSSCH, second-stage sidelink control information and the SL-PRS;
    the PSSCH carries data and the second-stage sidelink control information, the second-stage sidelink control information is used to decode the PSSCH and/or to schedule the SL-PRS.

18. A communication device, comprising a processor and a memory, wherein the memory stores a program or instruction executable on the processor, and the program or instruction, when executed by the processor, causes the processor to implement steps of the method for transmitting or receiving channel as claimed in any one of claims 1 to 16.

19. A readable storage medium, wherein the readable storage medium stores a program or instruction, and when executed by a processor, the program or instruction causes the processor to perform the method for transmitting or receiving channel as claimed in any one of claims 1 to 16.

Fig. 1

The second SL
symbol of the slot
(time unit)

Slot

Lowest RB ◄

subchannel

Automatic gain control （AGC）

GP

first PSSCH DMRS
symbol

PSCCH: 1st-stage-SCI    2nd-stage-SCI    data

2nd-stage-SCI+DMRS（FDM）    DMRS

Fig. 2

A physical sidelink control channel (PSCCH) and a physical sidelink shared channel
(PSSCH) is transmitted or received, or the PSCCH, the PSSCH and a sidelink-
positioning reference signal (SL-PRS) is transmitted or received

201

Fig. 3

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| A G C | PSC CH | PSC CH | D M RS + 2nd - sta ge- SCI | 2nd- stag e- SCI | SL- PRS | SL- PRS | SL- PRS | SL- PRS | | DM RS | | | GP |

Fig. 4

Apparatus for transmitting or receiving channel — 400

Transmitting or receiving component — 401

Fig. 5

500

Communication device

501 — Processor ⟷ Memory — 502

## INTERNATIONAL SEARCH REPORT

| International application No. |
| --- |
| **PCT/CN2024/099554** |

### A.  CLASSIFICATION OF SUBJECT MATTER

H04W 74/00(2009.01)i

According to International Patent Classification (IPC) or to both national classification and IPC

### B.  FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧, 旁, 边, 副, 直连, 链路, 通信, 连接, 定位, 参考信号, 共享, 资源, 池, 控制信息, 时隙, 时域, 频域, 配置, 映射, 二阶, 第二, 二级, 速率, 匹配, sidelink, SL, PRS, position, resource, share, pool, SCI, 2nd, two-stage, slot, frequency, configure, comb size, DMRS, rate, match

### C.  DOCUMENTS CONSIDERED TO BE RELEVANT

| Category* | Citation of document, with indication, where appropriate, of the relevant passages | Relevant to claim No. |
| --- | --- | --- |
| X | CN 115706627 A (CICT CONNECTED AND INTELLIGENT TECHNOLOGIES CO., LTD.) 17 February 2023 (2023-02-17) description, paragraphs [0285]-[0591] | 1-19 |
| X | CN 115706630 A (CICT CONNECTED AND INTELLIGENT TECHNOLOGIES CO., LTD.) 17 February 2023 (2023-02-17) description, paragraphs [0161]-[0651] | 1-19 |
| X | CN 116321473 A (VIVO MOBILE COMMUNICATION CO., LTD.) 23 June 2023 (2023-06-23) description, paragraphs [0165]-[1609] | 1-19 |
| X | HUAWEI et al. "Resource Allocations for SL Positioning" *3GPP TSG-RAN WG1 Meeting #112, R1-2300081*, 17 February 2023 (2023-02-17), text, sections 3-7 | 1-19 |
| A | WO 2023075976 A1 (QUALCOMM INC.) 04 May 2023 (2023-05-04) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 September 2024** | **17 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/099554**

| Patent document cited in search report | | | Publication date (day/month/year) | Patent family member(s) | Publication date (day/month/year) |
|---|---|---|---|---|---|
| CN | 115706627 | A | 17 February 2023 | None | |
| CN | 115706630 | A | 17 February 2023 | None | |
| CN | 116321473 | A | 23 June 2023 | None | |
| WO | 2023075976 | A1 | 04 May 2023 | None | |

Form PCT/ISA/210 (patent family annex) (July 2022)

**REFERENCES CITED IN THE DESCRIPTION**

**Patent documents cited in the description**

- CN 202310836864